# EUROPEAN PATENT APPLICATION

(11) **EP 4 793 081 A1**
(43) Date of publication of application: **19.08.2026**
(21) Application number: 26156068.4
(22) Date of filing: 03.02.2026
(51) Int. Cl.: B60K 35/10, B60K 35/22, B60K 35/81

(54) **WORK VEHICLE**

(30) Priority: 14.02.2025 JP 2025021950
(71) Applicant: Yanmar Holdings Co., Ltd., Osaka (JP)
(72) Inventor: TORIU, Kyohei, Okayama (JP)
(74) Representative: Isarpatent

(57) **Abstract**

[Problem] Provided is a technique capable of improving convenience of a work vehicle capable of using a plurality of travel drive modes.

[Solution] An exemplary work vehicle is a work vehicle switchable between a plurality of travel drive modes and between a plurality of speed change states, and includes a display device that displays a setting screen for setting the travel drive mode. The travel drive mode can be set for each of the speed change states using the setting screen.

## Description

### TECHNICAL FIELD

The present invention relates to a work vehicle.

### BACKGROUND ART

Conventionally, there is known a tractor capable of switching a travel drive mode (travel method) between a two-wheel (rear-wheel) drive state and a four-wheel (front-and-rear-wheel) drive state (see, for example, Patent Document 1). In Patent Document 1, switching between the two-wheel (rear-wheel) drive state and the four-wheel (front-and-rear-wheel) drive state is performed using a two-wheel drive/four-wheel drive switching lever arranged above a fender.

### PRIOR ART DOCUMENT

### PATENT DOCUMENT

Patent Document 1: JP-A-2013-154739

### SUMMARY OF INVENTION

### TECHNICAL PROBLEM

In addition to a two-wheel drive mode in which rear wheels are driven and a four-wheel drive mode in which front and rear wheels are driven, a plurality of types of travel drive modes such as a double speed mode in which the front wheels rotate at twice the speed of the rear wheels and an automatic brake mode in which the number of rotations on the inner side of the rear wheels is suppressed at the time of turning are known as travel drive modes of a work vehicle. In addition, an available travel drive mode may change depending on a use state of an auxiliary shift. For this reason, when the travel drive mode of the work vehicle is set or switched using a physical switch such as a lever or a button, there is a possibility that labor for an operation increases or it becomes difficult to understand a correspondence relationship between the operation and the actual operation of the work vehicle.

An object of the present invention is to provide a technique capable of improving convenience of a work vehicle capable of using a plurality of travel drive modes.

### SOLUTION TO PROBLEM

An exemplary work vehicle of the present invention is a work vehicle switchable between a plurality of travel drive modes and between a plurality of speed change states, and includes a display device that displays a setting screen for setting the travel drive modes, the travel drive modes being settable separately for the speed change states, respectively, using the setting screen.

### ADVANTAGEOUS EFFECTS OF INVENTION

According to the exemplary invention, it is possible to improve the convenience of the work vehicle capable of using the plurality of travel drive modes.

### BRIEF DESCRIPTION OF DRAWINGS

Fig. 1 is a side view illustrating a schematic configuration of a work vehicle;
Fig. 2 is a diagram for describing a control system included in the work vehicle;
Fig. 3 is a block diagram illustrating functions of a touch panel control unit included in a touch panel;
Fig. 4 is a schematic view illustrating a configuration of an instrument panel;
Fig. 5 is a view illustrating an example of a setting screen for a travel drive mode using the touch panel;
Fig. 6 is a view illustrating another example of the setting screen of the travel drive mode using the touch panel;
Fig. 7 is a view illustrating a part of a mode transition table used when an auxiliary shift is set to a work stage;
Fig. 8 is a view illustrating a part of the mode transition table used when the auxiliary shift is set to a travel stage;
Fig. 9 is a flowchart illustrating a flow of automatic switching processing of the travel drive mode;
Fig. 10 is a schematic view illustrating a configuration around a steering wheel provided in a cab;
Fig. 11 is a view illustrating another part of the mode transition table used when the auxiliary shift is set to the work stage; and
Fig. 12 is a view illustrating another part of the mode transition table used when the auxiliary shift is set to the travel stage.

### DESCRIPTION OF EMBODIMENTS

Embodiments of the present invention will be described with reference to the drawings. Note that, in the drawings, the same or equivalent elements are denoted by the same reference signs, and the description thereof will not be repeated in a case where there is no particular need for description.

In the present specification, directions are defined as follows. First, a direction in which a work vehicle travels straight is defined as a front-rear direction, and front and rear are defined with a side where a steering wheel is located with respect to a driver's seat of the work vehicle is defined as a front side to define "front" and "rear". In addition, a right side and a left side when viewed from an operator sitting on the driver's seat facing the front side are defined as "right" and "left" to define a left-right direction orthogonal to the front-rear direction. In addition, a direction orthogonal to the front-rear direction and the left-right direction is defined as an up-down direction, the gravity direction is defined as a downward direction, and the opposite side thereof is defined as an upward direction to define "up" and "down". The above directions are names used merely for description, and are not intended to limit the actual positional relationships and directions.

### <1. Outline of work vehicle>

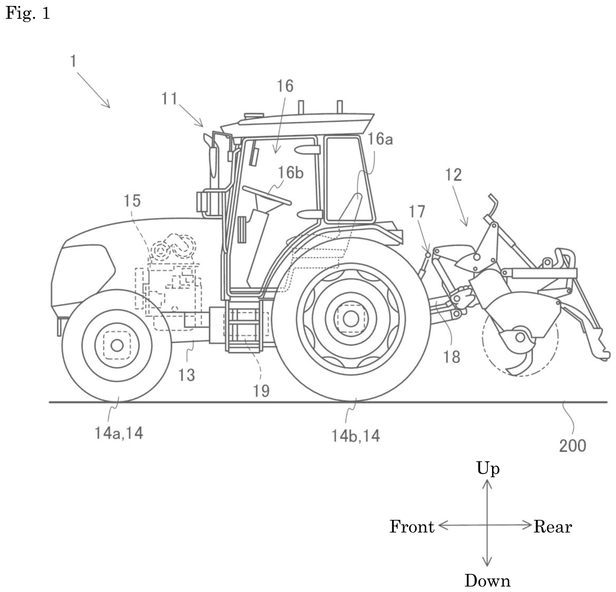

Fig. 1 is a side view illustrating a schematic configuration of a work vehicle 1 according to an embodiment of the present invention. Fig. 1 is a left side view in detail. As illustrated in Fig. 1, the work vehicle 1 includes a vehicle body 11 and a work implement 12.

The vehicle body 11 constitutes a main part of the work vehicle 1 and can travel in a work site 200. The work implement 12 is provided in the work vehicle 1 by being attached to the vehicle body 11. The work vehicle 1 travels while working using the work implement 12. The work vehicle 1 travels while working in the work site 200. In the present embodiment, the work site 200 is, for example, a farm field. That is, the work vehicle 1 is a farm field work vehicle that performs ground work in the farm field 200.

Note that the work vehicle 1 may travel on a road, such as a public road, in order to move locations other than the work site 200. That is, the place where the work vehicle 1 travels is not limited to the work site 200.

In addition, the work implement 12 is attached to a rear portion of the vehicle body 11 in the present embodiment. The work vehicle 1 is a tractor that tows the work implement 12 using the vehicle body 11. However, the work implement 12 may be configured to be attached to a front portion of the vehicle body 11. That is, the work vehicle of the present invention may be configured to include the work implement in the front portion of the vehicle body. The work vehicle of the present invention may be a work vehicle for agricultural work other than a tractor, a work vehicle for civil engineering work or construction work, or the like.

The vehicle body 11 includes a base 13 and a pair of left and right traveling units 14 that support the base 13 and are arranged to be spaced apart from each other in the left-right direction. Each of the left and right traveling units 14 includes a front wheel 14a and a rear wheel 14b. That is, the front wheels 14a include a left front wheel 14a and a right front wheel 14a. In addition, the rear wheels 14b include a left rear wheel 14b and a right rear wheel 14b.

The front wheels 14a and the rear wheels 14b are provided so as to be able to transmit power from a power source 15 arranged in front of the base 13. Power is transmitted from the power source 15 to the front wheels 14a and the rear wheels 14b, so that the vehicle body 11 can travel in the farm field 200 and the like. Note that the power source 15 is an engine in the present embodiment, but is not limited thereto, and the power source may be a motor or the like.

The base 13 is provided with a cab 16 on which the operator (a user) boards. The cab 16 includes a driver's seat 16a on which the operator sits, a steering wheel 16b that is arranged in front of the driver's seat 16a and enables the operator to steer the work vehicle 1, and a plurality of operation tools (not illustrated in Fig. 1) that enable the operator to perform various operations.

Note that the plurality of operation tools include a main shift lever and an auxiliary shift lever. The main shift lever is an operation tool for steplessly changing (freely changing) the traveling speed of the work vehicle 1. The auxiliary shift lever is, for example, an operation tool for instructing one of two stages (a low-speed side and a high-speed side). The operator designates a rough speed with the auxiliary shift lever, and then designates a fine speed with the main shift lever.

The work implement 12 is coupled to the rear side of the base 13 via a coupling mechanism 17. In the present embodiment, the work implement 12 is connected to the base 13 so as to be movable up and down. A PTO shaft 18 for outputting power generated by the power source 15 to the work implement 12 is arranged at the rear portion of the base 13. The power of the power source 15 is transmitted to the PTO shaft 18 via a transmission 19. Note that a power source for driving the work implement 12 may be provided separately from the power source 15 configured to cause the vehicle body 11 to travel. The separately provided power source may be a motor or the like.

In the present embodiment, the work implement 12 is a rotary tiller. The ground work performed by the work vehicle 1 is tilling work. However, the work implement 12 is not limited to the rotary tiller, and may be a plow, a harvesting machine, a harrowing work implement (drive harrow), a chemical applicator, a fertilizing machine, or the like. In addition, the work vehicle 1 may be provided to enable replacement of a plurality of types of the work implements 12.

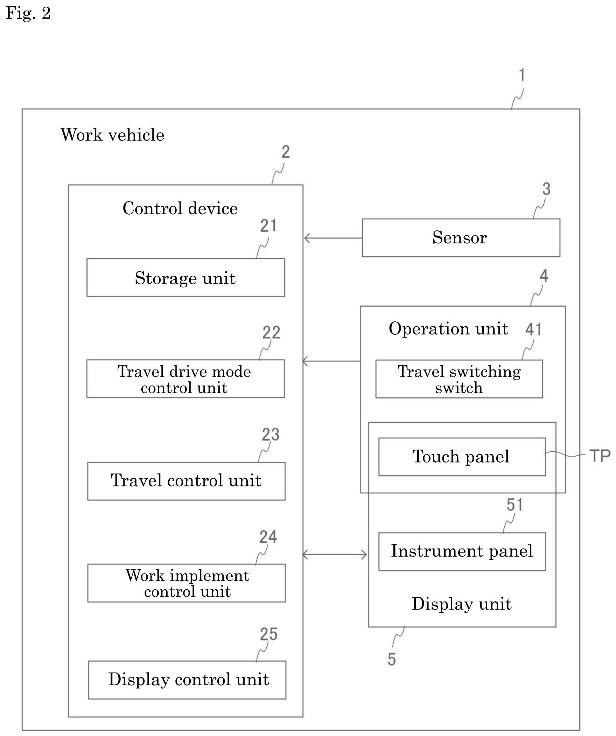

Fig. 2 is a diagram for describing a control system included in the work vehicle 1 according to the embodiment of the present invention. Note that components necessary for describing features of the work vehicle 1 according to the embodiment of the present invention are illustrated in Fig. 2, and description of other general components and the like is omitted. As illustrated in Fig. 2, the work vehicle 1 includes a control device 2.

The control device 2 is, for example, a computer device including a calculation unit, an input/output unit (not illustrated), and a storage unit 21. The calculation unit is, for example, an integrated circuit such as a processor or a microprocessor. The storage unit 21 is a main storage device such as a read only memory (ROM) and a random access memory (RAM). The storage unit 21 may further include an auxiliary storage device such as a hard disk drive (HDD) or a solid state drive (SSD). The storage unit 21 stores various types of programs, data, and the like. The calculation unit reads various programs from the storage unit 21 and executes arithmetic processing according to the programs.

In the present embodiment, the control device 2 can operate as various functional units by cooperation of the above-described hardware and software. As illustrated in Fig. 2, the various functional units include a travel drive mode control unit 22, a travel control unit 23, a work implement control unit 24, and a display control unit 25. Details of the functional units 22 to 25 will be described later.

In the present embodiment, it can be said that each of the functional units 22 to 25 included in the control device 2 is implemented by the calculation unit executing arithmetic processing according to a program, that is, by software. However, this is an example, and the functions of the functional units may be implemented by another method. At least some of the functional units 22 to 25 may be implemented by using, for example, an application specific integrated circuit (ASIC), a field programmable gate array (FPGA), or the like. That is, at least some of the functional units 22 to 25 may be implemented by hardware using a dedicated IC or the like. In addition, at least some of the functional units 22 to 25 may be implemented by using software and hardware in combination. In addition, each of the functional units 22 to 25 is a conceptual component. A function performed by one component may be distributed to a plurality of components. In addition, functions of a plurality of components may be integrated into one component.

In addition, the control device 2 may include one piece of hardware or may include plural pieces of hardware capable of communicating with each other. For example, the work vehicle 1 may include a remote operation device (not illustrated) that enables a remote operation by the operator at a position away from the vehicle body 11. In such a case, the control device 2 may be arranged only on the vehicle body 11, or may be arranged separately on the vehicle body 11 side and the remote operation device side. Note that the remote operation device is a device provided so as to be capable of communicating with the vehicle body 11, and may be, for example, a tablet terminal, a smartphone, a notebook computer, a proportional control system, or the like.

In addition, the control device 2 may be provided so as to be capable of communicating with a server device via a network such as the Internet. In such a case, some functions of the control device 2 may be implemented by the server device. In addition, a part of information stored in the storage unit 21 may be stored in the server device.

As illustrated in Fig. 2, the work vehicle 1 includes not only the control device 2 but also elements 3 to 5 directly or indirectly connected to the control device 2. These elements 3 to 5 and the control device 2 may be connected in a wired or wireless manner, for example. In addition, these elements 3 to 5 may be connected to a device (the remote operation device, the server device, or the like) capable of communicating with the control device 2 in a wired or wireless manner, and may be indirectly connected to the control device 2 via the device capable of communicating.

A sensor 3 detects information relating to the work vehicle 1, and outputs the detected information to the control device 2. Specifically, a plurality of types of the sensors 3 are mounted on the work vehicle 1. Each of the plurality of types of sensors 3 outputs the detected information to the control device 2. The sensor 3 is mounted on, for example, the vehicle body 11 or the work implement 12. In some cases, the sensor 3 may be provided in a device (such as the remote operation device described above) available at a position away from the vehicle body 11. Examples of the plurality of types of sensors 3 include a speed sensor that detects the speed of the work vehicle 1, a steering angle sensor that detects a steering angle of steering using the steering wheel 16b of the work vehicle 1, a global navigation satellite system (GNSS) sensor that detects a position of the work vehicle 1, and a lever position sensor that detects a lever position of the main shift lever or the auxiliary shift lever.

An operation unit 4 enables the operator to issue an instruction to the control device 2. In the present embodiment, the operation unit 4 includes a plurality of operation devices. The operation unit 4 is provided, for example, in the vehicle body 11. However, in a case where the work vehicle 1 includes the remote operation device, at least some of the operation devices constituting the operation unit 4 may be included in the remote operation device. The operation unit 4 may be, for example, a button, a lever, a dial, a touch panel, or the like.

As illustrated in Fig. 2, the operation unit 4 includes a touch panel TP in the present embodiment. Note that the touch panel TP is also included in a display unit 5 in order to have both functions of an input device and a display device. Details of the touch panel TP will be described later. In the present embodiment, the operation unit 4 includes a travel switching switch 41. Details of the travel switching switch 41 will also be described later.

The display unit 5 appropriately displays information in accordance with an instruction from the control device 2. In the present embodiment, the display unit 5 includes a plurality of display devices. The display unit 5 is provided, for example, in the vehicle body 11. However, in a case where the work vehicle 1 includes the remote operation device, at least some of the display devices constituting the display unit 5 may be included in the remote operation device.

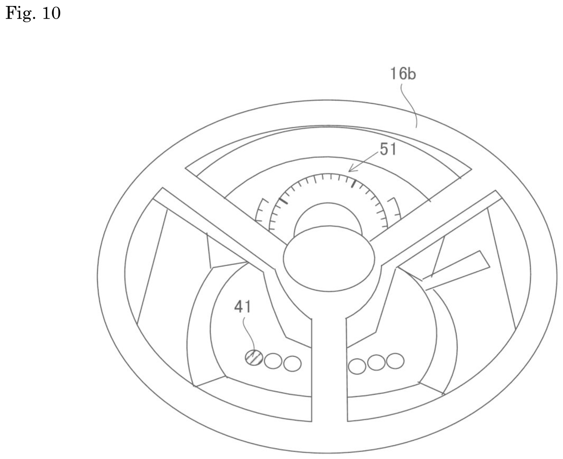

In the present embodiment, the display unit 5 includes an instrument panel 51 and the touch panel TP. The instrument panel 51 is provided in front of the steering wheel 16b of the cab 16 (see Fig. 10 to be described later), and displays various types of information relating to the work vehicle 1. The instrument panel 51 displays, for example, speed information, fuel information, water temperature information, travel drive mode (travel method) information, and the like.

The touch panel TP is arranged, for example, in the periphery of the driver's seat 16a. The touch panel TP displays at least a setting screen for setting a travel drive mode of the work vehicle 1. The operator (user) can make a setting relating to the travel drive mode on the setting screen. Details relating to the setting of the travel drive mode will be described later. The touch panel TP is preferably configured to enable settings of other functions of the work vehicle 1, such as a setting relating to autonomous traveling, in addition to the setting of the travel drive mode.

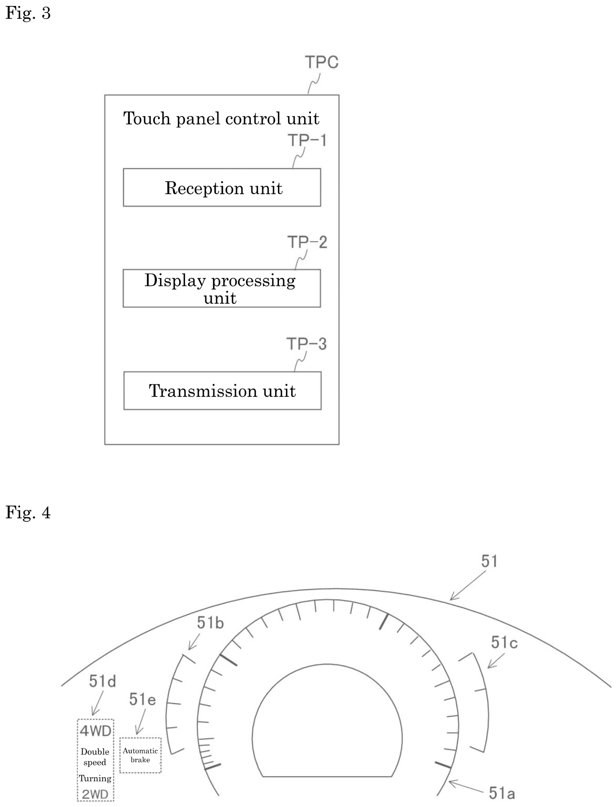

Fig. 3 is a block diagram illustrating functions of a touch panel control unit TPC included in the touch panel TP. Note that the touch panel control unit TPC is a computer device including a calculation unit including a processor or the like. The functions of the touch panel control unit TPC are implemented by the processor executing arithmetic processing according to a program. As illustrated in Fig. 3, the touch panel control unit TPC includes a reception unit TP-1, a display processing unit TP-2, and a transmission unit TP-3 as functional units.

The reception unit TP-1 receives a touch operation of the operator on the touch panel TP. The display processing unit TP-2 performs display processing according to the touch operation of the operator and display processing according to an instruction from the control device 2. The transmission unit TP-3 transmits, to the control device 2, content (instruction information) of the instruction by the touch operation of the operator.

Note that the touch panel TP may be installed in the vehicle body 11, or may be incorporated in a portable device that can be brought into the vehicle body 11 and taken out from the vehicle body 11. The portable device may be, for example, the remote operation device described above. In addition, the functions implemented by the touch panel TP of the present embodiment may be implemented by a combination of an input device and a display device that are separately configured.

Referring back to Fig. 2, an outline of the functions of the control device 2 will be described.

The travel drive mode control unit 22 performs control processing relating to the travel drive mode (travel method). The work vehicle 1 of the present embodiment can be switched between a plurality of travel drive modes. The operator can make the setting relating to the travel drive mode using the travel switching switch 41 or the touch panel TP. The travel drive mode control unit 22 determines whether or not to switch the current travel drive mode in accordance with an instruction from the operator using the travel switching switch 41 or the touch panel TP.

In the work vehicle 1 of the present embodiment, the selectable travel drive modes include a two-wheel drive mode, a four-wheel drive mode, a double speed mode, and a turning two-wheel drive mode. The travel drive mode of the work vehicle 1 is set to any one of the two-wheel drive mode, the four-wheel drive mode, the double speed mode, and the turning two-wheel drive mode under the control of the travel drive mode control unit 22.

Note that the two-wheel drive mode is a travel drive mode in which the work vehicle 1 travels by two-wheel drive using the left and right rear wheels 14b. The four-wheel drive mode is a travel drive mode in which the work vehicle 1 travels by four-wheel drive using the left and right front wheels 14a and the left and right rear wheels 14b. The double speed mode is a travel drive mode in which the front wheels 14a are rotated faster (rotated at a substantially double speed) than the rear wheels 14b during turning travel. The turning two-wheel drive mode is a travel drive mode in which the work vehicle 1 travels by two-wheel drive only during turning, and travels by four-wheel drive in other cases.

In addition, in the work vehicle 1 of the present embodiment, an automatic brake that can be used in combination with each of the two-wheel drive mode, the four-wheel drive mode, the double speed mode, and the turning two-wheel drive mode is prepared. In a state where the automatic brake is enabled, the work vehicle 1 travels while applying the brake to the rear wheels 14b on a turning side during turning travel.

In the present embodiment, the work vehicle 1 can be switched between a plurality of speed change states by using an auxiliary shift lever (not illustrated). The plurality of speed change states may be rephrased as a plurality of auxiliary shift stages. The plurality of speed change states include a state where a low-speed stage for low-speed travel is set and a state where a high-speed stage for high-speed travel is set. The low-speed stage is a speed change state (speed change stage) used to perform working travel, and is also called a work stage. The high-speed stage is a speed change state (speed change stage) used for travel on a road such as a public road, and is also called a travel stage. Note that the number of the plurality of speed change states (auxiliary shift stage) is not limited to two, and may be three or more. A more detailed speed change stage may be set in the low-speed stage or the high-speed stage.

In the work vehicle 1 of the present embodiment, in consideration of safety and the like, the speed change state selected by the auxiliary shift lever affects selection of the travel drive mode and selection of enabling/disabling of the automatic brake. For this reason, in detail, the travel drive mode control unit 22 performs determination relating to switching of the travel drive mode in consideration of the speed change state selected by the auxiliary shift lever in addition to an instruction of the operator using the travel switching switch 41 or the touch panel TP. Details of the setting of the travel drive mode and switching processing will be described later. Note that the speed change state (speed change stage) selected by the auxiliary shift lever can be determined based on information from the lever position sensor for the auxiliary shift lever included in the above-described sensors 3.

The travel control unit 23 controls a travel system of the work vehicle 1 in accordance with the travel drive mode determined by the travel drive mode control unit 22. When the travel drive mode is set to the two-wheel drive mode, the travel control unit 23 causes the work vehicle 1 to perform two-wheel drive travel according to instruction information such as the input speed and steering. When the travel drive mode is set to the four-wheel drive mode, the travel control unit 23 causes the work vehicle 1 to perform four-wheel drive travel according to instruction information such as the input speed and steering. When the travel drive mode is set to the double speed mode, the travel control unit 23 causes the work vehicle 1 to perform four-wheel drive travel according to instruction information such as the input speed and steering in principle, and to perform double speed travel in which the front wheels 14a are rotated faster than the rear wheels 14b when turning is detected. When the travel drive mode is set to the turning two-wheel drive mode, the travel control unit 23 causes the work vehicle 1 to perform four-wheel drive travel according to instruction information such as the input speed and steering in principle, and to perform two-wheel drive travel when turning is detected.

Note that instruction information such as the speed and steering may be obtained as the operator operates (manually operates) the operation tools (the steering wheel, levers, pedals, and the like) provided in the cab 16. However, in a case where the work vehicle 1 has an autonomous driving function, the instruction information such as the speed and steering may be information obtained by calculation performed by the control device 2 using information obtained from the sensor 3. In addition, whether or not the work vehicle 1 is turning may be determined using steering angle information or the like obtained from the steering angle sensor included in the above-described sensors 3.

The work implement control unit 24 controls a working system of the work vehicle 1 in accordance with input operation information relating to the work implement 12. Examples of the control on the working system include lifting/lowering control of the work implement 12 and switching control of power transmission with respect to the work implement 12 using a PTO power transmission unit. Note that the operation information relating to the work implement 12 may be obtained as the operator operates (manually operates) the operation tools (levers, pedals, and the like) provided in the cab 16. However, in a case where the work vehicle 1 has an autonomous driving function including automatic control of the work implement 12, the operation information relating to the work implement 12 may be information obtained by the control device 2 based on information from the sensor 3.

The display control unit 25 controls the display unit 5 according to information obtained from the sensor 3, information obtained from the other control units 22 to 24, and the like. Specifically, the display control unit 25 performs display control of the instrument panel 51 and display control of the touch panel TP. In the present embodiment, the display control of the instrument panel 51 by the display control unit 25 includes display control relating to the travel drive mode. This will be briefly described with reference to Fig. 4.

Fig. 4 is a schematic view illustrating a configuration of the instrument panel 51. As illustrated in Fig. 4, the instrument panel 51 displays a speedometer 51a, a fuel gauge 51b, and a water temperature gauge 51c. In addition, the instrument panel 51 includes a travel drive mode indicator 51d that notifies the operator of the currently set travel drive mode, and an automatic brake indicator 51e.

The travel drive mode indicator 51d displays the currently set travel drive mode by illuminating its related characters. For travel drive modes that are not currently set, related characters thereof are not illuminated. For example, in a case where the currently set travel drive mode is the four-wheel drive mode, "4WD", which correspond to the related characters, are illuminated, and "Double speed" and "Turning 2WD", which are related to the other travel drive modes, are not illuminated. The operator can recognize the current travel drive mode from a lighting state of a character portion.

In the example illustrated in Fig. 4, characters related to the double speed mode are "Double speed", and characters related to the turning two-wheel drive mode are "Turning 2WD". In addition, in the example illustrated in Fig. 4, characters (for example, "2WD") related to the two-wheel drive mode are not prepared on the travel drive mode indicator 51d. Specifically, when the two-wheel drive mode is set, the characters that have been illuminated on the travel drive mode indicator 51d are not displayed. Even with such a configuration, there is no particular problem since the operator can recognize that the current travel drive mode is the two-wheel drive mode since the characters that have been illuminated are not displayed on the travel drive mode indicator 51d. However, when the two-wheel drive mode is set on the travel drive mode indicator 51d, "2WD" which correspond to the related characters may be illuminated.

Characters of the automatic brake are prepared in the automatic brake indicator 51e. In the automatic brake indicator 51e, the characters of the automatic brake are illuminated when the automatic brake is set, and the characters of the automatic brake are not illuminated when the automatic brake is not set. The operator can recognize whether the automatic brake is enabled or disabled from a lighting state of the characters of the automatic brake.

### <2. Details relating to travel drive mode>

Next, matters relating to the travel drive mode in the work vehicle 1 of the present embodiment will be described in detail.

As can be seen from the above description, the plurality of switchable (settable) travel drive modes in the work vehicle 1 include the two-wheel drive mode for driving the rear wheels 14b and the four-wheel drive mode for driving the front wheels 14a and the rear wheels 14b. In addition, the plurality of travel drive modes further include the double speed mode in which the front wheels 14a are rotated faster than the rear wheels 14b and the turning two-wheel drive mode in which the four-wheel drive mode is switched to the two-wheel drive mode during turning.

The work vehicle 1 includes a display device that displays the setting screen for setting the travel drive mode. Specifically, the display device is the above-described touch panel TP (see Fig. 2). Note that the display device that displays the setting screen for setting the travel drive mode does not need to have an input function by a touch operation when an input device connected to the display device is separately provided, and does not need to be a touch panel.

In the work vehicle 1, the travel drive mode can be set separately for each of the speed change states using the setting screen for setting the travel drive mode. With such a configuration, even when the travel drive mode that can be set in accordance with the speed change state is changed, it is possible to prevent the procedure for setting the travel drive mode from becoming complicated or difficult to understand. That is, it is possible to improve the operability of the operator (user) at the time of setting the travel drive mode.

Note that the speed change states refer to speed change states switchable by the auxiliary shift lever. The switchable speed change states in the work vehicle 1 include a first speed change state and a second speed change state. Specifically, the first speed change state is a state where the auxiliary shift is set to the low-speed stage (work stage). Specifically, the second speed change state is a state where the auxiliary shift is set to the high-speed stage (travel stage). In the work vehicle 1, the travel drive mode in the first speed change state and the travel drive mode in the second speed change state can be separately set using the touch panel TP.

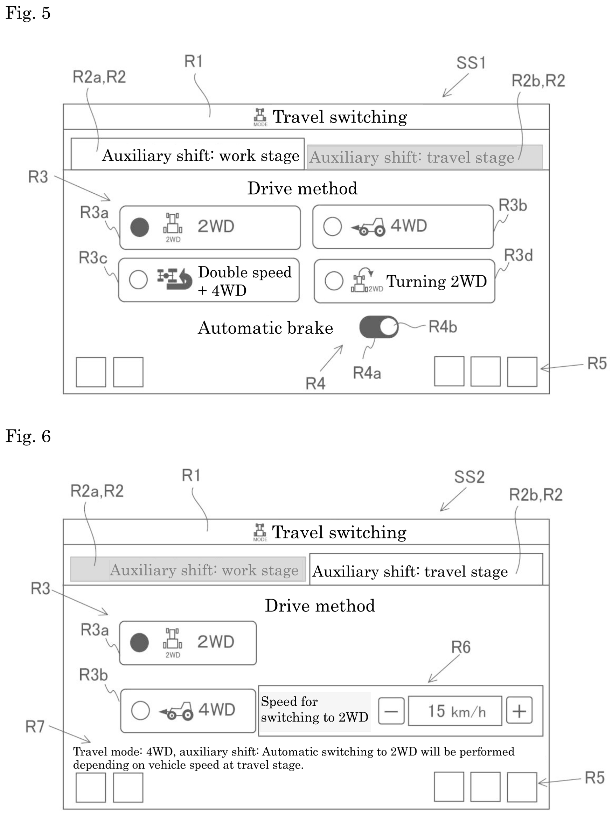

Fig. 5 is a view illustrating an example of the setting screen for the travel drive mode using the touch panel TP. Fig. 6 is a view illustrating another example of the setting screen for the travel drive mode using the touch panel TP. Specifically, Fig. 5 is a setting screen for the travel drive mode in a case where the speed change state is the first speed change state, and Fig. 6 is a setting screen for the travel drive mode in a case where the speed change state is the second speed change state.

That is, in the present embodiment, the touch panel TP (display device) switches and displays the setting screen for setting the travel drive mode for each of the speed change states. Specifically, the setting screens for setting the travel drive mode include a first setting screen SS1 (see Fig. 5) for the first speed change state and a second setting screen SS2 (see Fig. 6) for the second speed change state. Although the travel drive mode can be set for each of the speed change states on one setting screen, switching the setting screen for setting the travel drive mode for each of the speed change states as in the present embodiment makes it easier to see setting items displayed on the setting screen and to understand the content of the setting items.

As can be seen by comparing Fig. 5 and Fig. 6, items that can be set are different between the first setting screen SS1 and the second setting screen SS2. In a case where the travel drive mode that can be set is changed in accordance with the speed change state, the operator may be confused about the setting of the travel drive mode. However, with the configuration as in the present embodiment, the operator can easily understand that items that can be set are changed depending on the speed change state. Further, since the setting screen is displayed separately for each of the speed change states in this configuration, it is possible to suppress the setting items of each of the setting screens from being complicated, and it is possible to facilitate an operation of setting the travel drive mode performed by the operator.

As illustrated in Fig. 5, the first setting screen SS1 includes a title display area R1, a speed change state selection area R2, a travel drive mode selection area R3, an automatic brake selection area R4, and a screen switching icon display area R5. In the description of the first setting screen SS1, terms "up", "down", "left", and "right" are used with reference to the first setting screen SS1 illustrated in Fig. 5. "Up", "down", "left", or "right" used in the description of the first setting screen SS1 and "up", "down", "left", or "right" defined above for the overall description of the work vehicle 1 do not necessarily indicate the same direction.

The title display area R1 is provided as an area for displaying a title determined such that the operator can easily grasp the content of a screen being selected. In the example illustrated in Fig. 5, the title display area R1 has a horizontally long rectangular shape, and is provided at an upper end of the rectangular setting screen. As an example, "travel switching" is displayed as a title in the title display area R1 of the first setting screen SS1. In the example illustrated in Fig. 5, an icon corresponding to a title name is also displayed such that the content of the screen being selected can be easily grasped at a glance.

The speed change state selection area R2 is provided as an area that enables switching between the setting screens provided respectively for the speed change states. Specifically, the speed change state selection area R2 includes a work stage selection area R2a and a travel stage selection area R2b. The work stage selection area R2a is a selection area for displaying a screen (that is, the first setting screen SS1) for setting the travel drive mode in a case where the auxiliary shift is set to the work stage (that is, in the first speed change state). The travel stage selection area R2b is a selection area for displaying a screen (that is, the second setting screen SS2) for setting the travel drive mode in a case where the auxiliary shift is set to the travel stage (that is, in the second speed change state). Each of the work stage selection area R2a and the travel stage selection area R2b has a horizontally long rectangular shape, and is provided below the title display area R1. Both the areas R2a and R2b are arranged side by side in the left-right direction with the work stage selection area R2a on the left side and the travel stage selection area R2b on the right side.

When the work stage selection area R2a is touched, the first setting screen SS1 illustrated in Fig. 5 is displayed. When the travel stage selection area R2b is touched, the second setting screen SS2 illustrated in Fig. 6 is displayed. In the speed change state selection area R2, a selection area on a speed change state side that is not selected on the current setting screen is grayed out and displayed with a smaller display area than an area that is being selected such that a speed change state selected on the current setting screen can be easily understood. In the screen illustrated in Fig. 5, the selection area on the speed change state side that is not selected on the current setting screen is the travel stage selection area R2b. The travel stage selection area R2b is grayed out and displayed with a smaller display area than the work stage selection area R2a. Note that at least one of gray-out display and downsizing of the display area is not necessarily provided as a function on the setting screen.

The travel drive mode selection area R3 is an area for selecting the travel drive mode desired to be used by the operator. The travel drive mode selected by the operator in this area is the travel drive mode set by the operator. The travel drive modes that can be set on the first setting screen SS1 include the two-wheel drive mode, the four-wheel drive mode, the double speed mode, and the turning two-wheel drive mode. Thus, the travel drive mode selection area R3 includes a two-wheel drive mode selection area R3a, a four-wheel drive mode selection area R3b, a double speed mode selection area R3c, and a turning two-wheel drive mode selection area R3d.

The travel drive mode selection area R3 is provided below the speed change state selection area R2. Each of the mode selection areas R3a, R3b, R3c, and R3d has a horizontally long rectangular shape, and is arranged at the center of the first setting screen SS1 in the state of being arranged in two columns in the left-right direction and in two rows in the up-down direction. Specifically, the four mode selection areas R3a, R3b, R3c, and R3d are arranged at the center of the first setting screen SS1 with the two-wheel drive mode selection area R3a on the upper left side, the four-wheel drive mode selection area R3b on the upper right side, the double speed mode selection area R3c on the lower left side, and the turning two-wheel drive mode selection area R3d on the lower right side.

In each of the mode selection areas R3a, R3b, R3c, and R3d, characters and an icon for identifying the travel drive mode, and a mark with which the selected state can be identified are displayed. In the example illustrated in Fig. 5, "2WD", "4WD", "Double Speed +4WD", and "Turning 2WD" are used as characters for identifying each travel drive mode. "2WD" means the two-wheel drive mode. "4WD" means the four-wheel drive mode. "Double Speed + 4WD" means the double speed mode. "Turning 2WD" means the turning two-wheel drive mode. In the example illustrated in Fig. 5, a filled circle ("•") and a white circle ("∘") are used as the mark with which the selected state can be identified. The filled circle indicates a state where the corresponding mode selection area is selected. The white circle indicates a state where the corresponding mode selection area is not selected.

When, for example, the two-wheel drive mode selection area R3a among the four mode selection areas R3a, R3b, R3c, and R3d is touched, the two-wheel drive mode is selected as the travel drive mode. When the two-wheel drive mode is selected, the mark indicating the selected state in the two-wheel drive mode selection area R3a is the filled circle. In this case, since the four-wheel drive mode selection area R3b, the double speed mode selection area R3c, and the turning two-wheel drive mode selection area R3d are not selected, the mark indicating the selected state is the white circle. Fig. 5 illustrates these states.

Although detailed description is omitted, if the four-wheel drive mode selection area R3b among the four mode selection areas R3a, R3b, R3c, and R3d is touched, the four-wheel drive mode is selected as the travel drive mode. When the double speed mode selection area R3c is touched among the four mode selection areas R3a, R3b, R3c, and R3d, the double speed mode is selected as the travel drive mode. When the turning two-wheel drive mode selection area R3d is touched among the four mode selection areas R3a, R3b, R3c, and R3d, the turning two-wheel drive mode is selected as the travel drive mode.

The automatic brake selection area R4 is an area where the operator can select whether the automatic brake is enabled or disabled. The automatic brake selection area R4 is provided below the travel drive mode selection area R3. In the example illustrated in Fig. 5, the automatic brake selection area R4 includes a rectangular area R4a extending in the left-right direction and a circular area R4b arranged in the rectangular area R4a. It is possible to switch between enabling and disabling of the automatic brake by moving the circular area R4b to the left and the right in the rectangular area R4a by a touch operation. In the example illustrated in Fig. 5, when the circular area R4b is arranged on the right side of the rectangular area R4a, the automatic brake is enabled. That is, Fig. 5 illustrates a screen state in a case where the operator selects enabling of the automatic brake. On the other hand, when the circular area R4b is arranged on the left side of the rectangular area R4a, the automatic brake is disabled.

In the example illustrated in Fig. 5, when the circular area R4b is arranged at a position where enabling of the automatic brake is selected, the rectangular area R4a is filled. On the other hand, when the circular area R4b is arranged at a position where disabling of the automatic brake is selected, the rectangular area R4a is not filled. With this configuration, the operator can immediately determine whether the automatic brake is enabled or disabled.

In the present embodiment, enabling and disabling of the automatic brake can be set in a switched manner for each of the travel drive modes that can be set on the first setting screen SS1. That is, the operator can set whether the automatic brake is enabled or disabled in each of the two-wheel drive mode, the four-wheel drive mode, the double speed mode, and the turning two-wheel drive mode. When the auxiliary shift is set to the work stage, the operator can set a total of eight modes relating to the travel drive mode. In performing the setting, the operator only needs to perform a touch operation on the travel drive mode selection area R3 once and a touch operation on the automatic brake selection area R4 once. That is, according to the configuration of the present embodiment, although there are many types of mode settings relating to the travel drive mode, the mode settings can be performed by a simple operation.

The screen switching icon display area R5 is provided such that switching from a travel drive mode switching screen (travel switching screen) to another screen can be easily performed. The screen switching icon display area R5 is provided below the automatic brake selection area R4 and at a lower end of the first setting screen SS1. In the screen switching icon display area R5, for example, a plurality of areas in which an icon imitating the home screen and the like are displayed are arranged in the left-right direction. When the area in which an icon is displayed is touched, the screen of the touch panel TP is switched to a screen corresponding to the touched icon.

As illustrated in Fig. 6, the second setting screen SS2 includes the title display area R1, the speed change state selection area R2, the travel drive mode selection area R3, the screen switching icon display area R5, an automatic switching speed setting area R6, and an attention-drawing area R7. Note that the configurations of the title display area R1, the speed change state selection area R2, and the screen switching icon display area R5 are similar to those of the first setting screen SS1 described above, and thus the description thereof will be omitted. In the description of the second setting screen SS2, terms "up", "down", "left", and "right" are used with reference to the second setting screen SS2 illustrated in Fig. 6. This point is similar to the case of the description of the first setting screen SS1.

Similarly to the case of the first setting screen SS1, the travel drive mode selection area R3 is an area for selecting the travel drive mode desired to be used by the operator. However, in the present embodiment, the double speed mode and the turning two-wheel drive mode cannot be used when the auxiliary shift is set to the travel stage for the reason of ensuring safety or the like. For the same reason, the automatic brake cannot be used when the auxiliary shift is set to the travel stage. Therefore, the travel drive modes that can be set on the second setting screen SS2 include the two-wheel drive mode and the four-wheel drive mode. The travel drive modes that can be set on the second setting screen SS2 do not include the double speed mode and the turning two-wheel drive mode.

Specifically, the travel drive mode selection area R3 on the second setting screen SS2 includes only the two-wheel drive mode selection area R3a and the four-wheel drive mode selection area R3b, but does not include the double speed mode selection area R3c and the turning two-wheel drive mode selection area R3d. In addition, the second setting screen SS2 is not provided with the automatic brake selection area R4. That is, when the auxiliary shift is set to the travel stage, the operator can set only one of the two-wheel drive mode and the four-wheel drive mode regarding the mode settings relating to the travel drive mode.

When the first setting screen SS1 and the second setting screen SS2 illustrated in Figs. 5 and 6 are compared with each other, a difference is recognized in a position of the four-wheel drive mode selection area R3b with respect to the two-wheel drive mode selection area R3a. In the second setting screen SS2, the two-wheel drive mode selection area R3a and the four-wheel drive mode selection area R3b are arranged up and down at a position closer to the left at the center of the screen. However, this is merely an example, and the first setting screen SS1 and the second setting screen SS2 may have the four-wheel drive mode selection area R3b at the same position with respect to the two-wheel drive mode selection area R3a.

The automatic switching speed setting area R6 is an area that allows the operator to set a speed at which the travel drive mode is automatically switched from the four-wheel drive mode to the two-wheel drive mode when the auxiliary shift is set to the travel stage. **In** the work vehicle 1 of the present embodiment, a configuration in which the travel drive mode is automatically changed from the four-wheel drive mode to the two-wheel drive mode when the traveling speed of the work vehicle 1 reaches a constant value only in a case where the auxiliary shift is set to the travel stage is adopted for the purpose of reducing deterioration of fuel consumption, wear of tires, and the like. The automatic switching speed setting area R6 is provided such that the operator can set this constant value.

**In** other words, when the work vehicle 1 is traveling in the second speed change state, automatic switching from the four-wheel drive mode to the two-wheel drive mode is performed when the traveling speed reaches a preset speed threshold. **In** the present embodiment, the automatic switching speed setting area R6 is provided on the second setting screen SS2. For this reason, the setting of the speed threshold can be changed on the second setting screen SS2. With such a configuration, it is possible to perform switching from the four-wheel drive mode to the two-wheel drive mode at a timing suitable for the needs of the operator according to a use environment and a use condition. Therefore, it is possible to improve usability felt by the operator for the work vehicle 1.

The automatic switching speed setting area R6 is provided on the right side of the four-wheel drive mode selection area R3b. The automatic switching speed setting area R6 has a horizontally long rectangular shape. **In** the automatic switching speed setting area R6, an explanatory sentence relating to the speed setting, a set speed, and buttons (software buttons) for the speed setting are displayed. The buttons for the speed setting include a set speed increase button represented by "+" and a set speed decrease button represented by "-". When a touch operation is performed on the set speed increase button, the set speed can be increased. When a touch operation is performed on the set speed decrease button, the set speed can be decreased. **In** the example illustrated in Fig. 6, the set speed is "15 km/h". By touching the set speed increase button in this state, the set speed can be set to a set value larger than 15 km/h. Conversely, the set speed can be set to a set value smaller than 15 km/h by touching the set speed decrease button. An increase/decrease rate of the set speed using each button can be set to, for example, 1 km/h.

For example, it is conceivable to set an automatic switching speed (the same as the above-described speed threshold) by using the automatic switching speed setting area R6 to be high under an environment with a bad road surface environment such as a muddy state or a snowy road. With the above setting, it is possible to travel in the four-wheel drive mode at a stage where traction at the start of traveling is necessary, and to automatically switch to the two-wheel drive mode at a stage where the traveling is stable and the speed becomes a medium speed or higher.

In the second setting screen SS2, prohibition of the automatic switching from the four-wheel drive mode to the two-wheel drive mode may be settable. There is a possibility that some operators always want to travel in the four-wheel drive mode when the auxiliary shift is set to the travel stage. For this reason, when the prohibition of the automatic switching can be set, it is possible to widely meet the needs of the operators.

The automatic switching prohibition setting may adopt, for example, a configuration in which an automatic switching prohibition button (software button) is provided in the second setting screen SS2. As another example, a configuration may be adopted in which the prohibition of the automatic switching is set when the automatic switching speed (speed threshold) set using the automatic switching speed setting area R6 is set to a predetermined value. The predetermined value may be, for example, an upper limit value of the speed that can be set in the automatic switching speed setting area R6. With this configuration, it is possible to perform the setting without adding the automatic switching prohibition button, and it is possible to suppress the display of the second setting screen SS2 from becoming complicated. Note that, in a case where the automatic switching prohibition is set, it is preferable to display characters or the like such that the operator can recognize the setting.

The attention-drawing area R7 is an area in which content that is better to draw attention of the operator with respect to the setting using the second setting screen SS2 is displayed using characters. In the example illustrated in Fig. 6, the attention-drawing area R7 is configured to display characters for notifying the operator of that the automatic switching from the four-wheel drive mode to the two-wheel drive mode is to be performed. The characters displayed in the attention-drawing area R7 may be always the same, but may be changed according to setting content of the operator using the second setting screen SS2. For example, in a case where the above-described automatic switching prohibition is set, characters for notifying this fact may be displayed in the attention-drawing area R7.

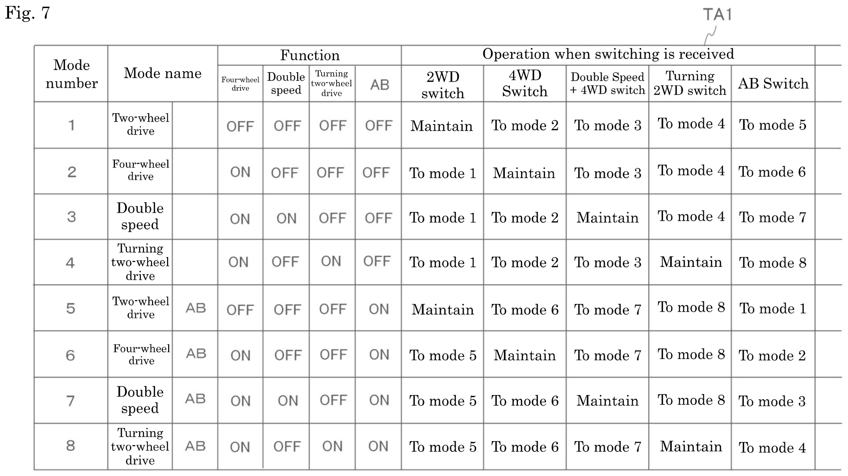

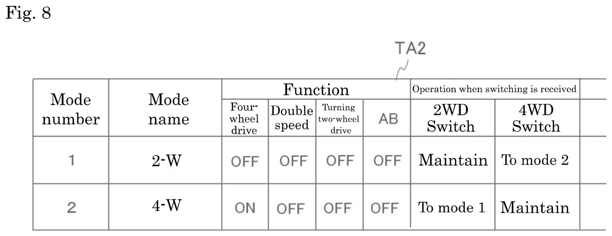

Fig. 7 is a view illustrating a part of a mode transition table TA1 used when the auxiliary shift is set to the work stage. Fig. 8 is a view illustrating a part of a mode transition table TA2 used when the auxiliary shift is set to the travel stage. In Figs. 7 and 8, a symbol "AB" is an abbreviation for automatic brake. In the following description, the mode transition table TA1 used when the auxiliary shift is set to the work stage may be expressed as a first mode transition table TA1. In addition, the mode transition table TA2 used when the auxiliary shift is set to the travel stage may be expressed as a second mode transition table TA2.

The mode transition tables TA1 and TA2 are tables referred to by the control device 2 (the travel drive mode control unit 22) when the setting relating to the travel drive mode including the setting of the automatic brake is made, and are stored in the storage unit 21 (see Fig. 2). When the setting relating to the travel drive mode is made, the travel drive mode control unit 22 refers to the mode transition tables TA1 and TA2 to make the setting relating to the travel drive mode.

As illustrated in Figs. 7 and 8, items included in the mode transition tables TA1 and TA2 include "Mode number", "Mode name", "Function", and "Operation when switching is received".

The item "Mode number" stores identification numbers given to identify a plurality of types of settable modes. The item "Mode number" serves as a primary key of the mode transition tables TA1 and TA2, and a data record is generated for each mode number. In the data record, "Mode name", "Function", and "Operation when switching is received", which are pieces of information corresponding to each mode number, are stored.

The item "Mode name" stores names of the respective modes. The item "Function" stores functions exhibited in the respective modes. Specifically, the item "Function" is subdivided into "Four-wheel drive", "Double speed", "Turning two-wheel drive", and "Automatic brake (AB)", and "ON" is stored when the subdivided function is exhibited, and "OFF" is stored when the subdivided function is not exhibited. "Operation when switching is received" stores a switching operation that needs to be performed by the travel drive mode control unit 22 when the setting of the travel drive mode using the touch panel TP is performed. Note that the item "Operation when switching is received" is specifically subdivided for each of setting selection switches (corresponding to the two-wheel drive mode selection area R3a and the like illustrated in Figs. 5 and 6) having a different number of types depending on a setting state of the auxiliary shift to store information, and this will be described later.

First, a mode switching operation using the first mode transition table TA1 (see Fig. 7) used when the auxiliary shift is set to the work stage will be described. In the first mode transition table TA1, eight numbers "1" to "8" are stored as the mode numbers. As the mode names given for the respective mode numbers, "Two-wheel drive", "Four-wheel drive", "Double speed", "Turning two-wheel drive", "Two-wheel drive + Automatic brake", "Four-wheel drive + Automatic brake", "Double speed + Automatic brake", and "Turning two-wheel drive + Automatic brake" are stored. In addition, the item "Operation when switching is received" is subdivided into "2WD switch", "4WD switch", "Double speed + 4WD switch", "Turning 2WD switch", and "automatic brake switch", and for each subdivided switch, a switching operation that needs to be performed by the travel drive mode control unit 22 when the switch is operated is stored.

Note that "2WD switch" corresponds to the two-wheel drive mode selection area R3a (see Fig. 5). "4WD switch" corresponds to the four-wheel drive mode selection area R3b (see Fig. 5). "Double speed + 4WD switch" corresponds to the double speed mode selection area R3c (see Fig. 5). "Turning 2WD switch" corresponds to the above-described turning two-wheel drive mode selection area R3d (see Fig. 5). "Automatic brake switch" corresponds to the above-described automatic brake selection area R4 (see Fig. 5).

Here, it is assumed that the auxiliary shift is set to the work stage. Then, it is assumed that the operator performs a setting operation relating to the travel drive mode using the first setting screen SS1. In this case, the travel drive mode control unit 22 performs mode switching determination relating to the travel drive mode according to the first mode transition table TA1.

For example, when the operator operates the 2WD switch in a case where the current mode setting is Mode 1 (corresponding to the mode number "1", the same applies hereinafter), the travel drive mode control unit 22 determines to maintain Mode 1 according to the first mode transition table TA1. In addition, for example, when the operator operates the 4WD switch in a case where the current mode setting is Mode 1, the travel drive mode control unit 22 determines to switch from Mode 1 to Mode 2 according to the first mode transition table TA1. In addition, for example, when the operator operates the automatic brake switch in a case where the current mode setting is Mode 1, the travel drive mode control unit 22 determines to switch from Mode 1 to Mode 5 according to the first mode transition table TA1. Note that all of the above examples correspond to processing executed with reference to the row of the mode number "1" of the first mode transition table TA1. Although all cases are not described, in other cases as well, the travel drive mode control unit 22 performs mode switching determination according to the first mode transition table TA1 as described above.

Next, a mode switching operation using the second mode transition table TA2 (see Fig. 8) used when the auxiliary shift is set to the travel stage will be described. In the second mode transition table TA2, two numbers of "1" and "2" are stored as the mode numbers. As the mode names given for the respective mode numbers, "Two-wheel drive" and "Four-wheel drive" are stored. In addition, the item "Operation when switching is received" is subdivided into "2WD switch" and "4WD switch", and a switching operation that needs to be performed by the travel drive mode control unit 22 when each of the subdivided switches is operated is stored.

Here, it is assumed that the auxiliary shift is set to the travel stage. Then, it is assumed that the operator performs a setting operation relating to the travel drive mode using the second setting screen SS2. In this case, the travel drive mode control unit 22 performs mode switching determination relating to the travel drive mode according to the second mode transition table TA2.

For example, when the operator operates the 2WD switch in a case where the current mode setting is Mode 1, the travel drive mode control unit 22 determines to maintain Mode 1 according to the second mode transition table TA2. In addition, for example, when the operator operates the 4WD switch in a case where the current mode setting is Mode 1, the travel drive mode control unit 22 determines to switch from Mode 1 to Mode 2 according to the second mode transition table TA2. In addition, for example, when the operator operates the 2WD switch in a case where the current mode setting is Mode 2, the travel drive mode control unit 22 determines to switch from Mode 2 to Mode 1 according to the second mode transition table TA2. In addition, for example, when the operator operates the 4WD switch in a case where the current mode setting is Mode 2, the travel drive mode control unit 22 determines to maintain Mode 2 according to the second mode transition table TA2.

When the travel drive mode control unit 22 determines a mode change relating to the travel drive mode, the display of the travel drive mode indicator 51d and the automatic brake indicator 51e (see Fig. 4) on the instrument panel 51 is appropriately changed under the control of the display control unit 25. The operator can quickly confirm the mode setting relating to the current travel drive mode by confirming the display of the travel drive mode indicator 51d and the automatic brake indicator 51e.

At the time of starting the work vehicle 1, the travel drive mode control unit 22 performs the mode setting in accordance with the setting of the auxiliary shift at the time of starting and the setting relating to the travel drive mode already set on the setting screens SS1 and SS2.

In addition, even when the setting of the auxiliary shift is changed in the middle, the setting relating to the travel drive mode on the setting screens SS1 and SS2 is maintained as it is and is not changed. When the setting of the auxiliary shift is changed, the travel drive mode control unit 22 determines a mode to be used in accordance with a setting condition set for each speed change stage (speed change state). However, the double speed mode, the turning two-wheel drive mode, and the automatic brake that can be used when the auxiliary shift is set to the work stage cannot be used when the auxiliary shift is set to the travel stage. For this reason, in the case of "Two-wheel drive + Automatic brake" in the work stage, "Two-wheel drive" is set when the work stage is switched to the travel stage. In the case of "Double speed", "Turning two-wheel drive", "Four-wheel drive + Automatic brake", "Double speed + Automatic brake", or "Turning Two-wheel drive + Automatic brake" in the work stage, "Four-wheel drive" is set when the work stage is switched to the travel stage.

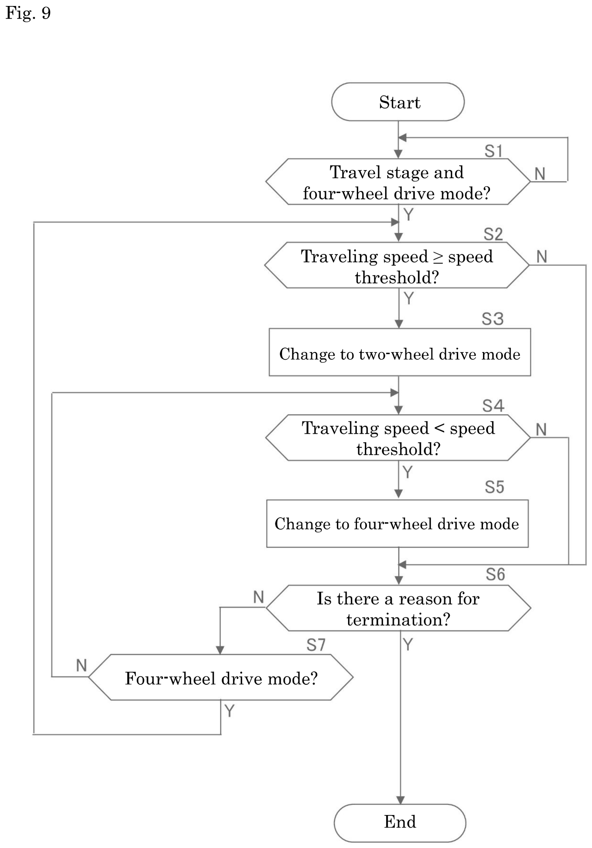

Fig. 9 is a flowchart illustrating a flow of automatic switching processing of the travel drive mode executed by the control device 2 (specifically, the travel drive mode control unit 22). Specifically, the automatic switching processing is automatic switching processing from the four-wheel drive mode to the two-wheel drive mode. The processing illustrated in Fig. 9 is executed when the work vehicle 1 is started and travel drive mode switching processing is enabled.

In step S1, the travel drive mode control unit 22 determines whether the auxiliary shift is set to the travel stage and the travel drive mode is set to the four-wheel drive mode. When the auxiliary shift is set to the travel stage and the travel drive mode is set to the four-wheel drive mode (Yes in step S1), the processing proceeds to the next step S2. On the other hand, when a condition that the auxiliary shift is the travel stage and the travel drive mode is set to the four-wheel drive mode is not satisfied (No in step S1), the process of step S1 is repeated.

In step S2, the travel drive mode control unit 22 determines whether the traveling speed of the work vehicle 1 is equal to or higher than a speed threshold. The speed threshold corresponds to the automatic switching speed set in the automatic switching speed setting area R6 of the second setting screen SS2 (see Fig. 6). When the traveling speed is equal to or higher than the speed threshold (Yes in step S2), the processing proceeds to the next step S3. When the traveling speed is lower than the speed threshold (No in step S2), the processing proceeds to step S6.

In step S3, the travel drive mode control unit 22 changes the travel drive mode from the four-wheel drive mode to the two-wheel drive mode. The operation of the travel control unit 23 in response to the change causes the work vehicle 1 to perform two-wheel drive travel. When the change to the two-wheel drive mode is made, the processing proceeds to the next step S4.

In step S4, the travel drive mode control unit 22 determines whether the traveling speed of the work vehicle 1 is lower than the speed threshold. When the traveling speed is lower than the speed threshold (Yes in step S4), the processing proceeds to the next step S5. When the traveling speed is equal to or higher than the speed threshold (No in step S4), the processing proceeds to step S6.

In step S5, the travel drive mode control unit 22 changes the travel drive mode from the two-wheel drive mode to the four-wheel drive mode. That is, the travel drive mode is returned to the four-wheel drive mode. The operation of the travel control unit 23 in accordance with a changing operation of the travel drive mode control unit 22 causes the work vehicle 1 to perform four-wheel drive travel. When the mode is changed to the four-wheel drive mode, the processing proceeds to the next step S6.

In step S6, the travel drive mode control unit 22 determines whether there is a reason for terminating the automatic switching processing. Examples of the reason for the termination include a case where the setting of the auxiliary shift is changed to the work stage by the operator, and a case where the setting of the travel drive mode is changed to the two-wheel drive mode by an instruction from the operator. When there is a reason for termination (Yes in step S6), the flow illustrated in Fig. 9 is ended. On the other hand, when there is no reason for termination (No in step S6), the processing proceeds to the next step S7.

In step S7, the travel drive mode control unit 22 determines whether the current travel drive mode is the four-wheel drive mode. In the case of being the four-wheel drive mode (Yes in step S7), the processing returns to step S2. In the case of not being the four-wheel drive mode (No in step S7), the processing returns to step S4.

Fig. 10 is a schematic view illustrating a configuration around the steering wheel 16b provided in the cab 16. As illustrated in Fig. 10, the travel switching switch 41 is arranged below the steering wheel 16b. The travel switching switch 41 is a physical switch, specifically, a button. The travel switching switch 41 is a switch for switching the travel drive mode.

That is, in the work vehicle 1, the plurality of travel drive modes can also be set by the travel switching switch 41 provided around the driver's seat 16a separately from the display device (the touch panel TP in the present embodiment). With such a configuration, the travel drive mode can be switched using the travel switching switch 41 even in a case where it is difficult to set the travel drive mode using the display device, for example, in a case where it is necessary to pay attention to the front of the work vehicle 1.

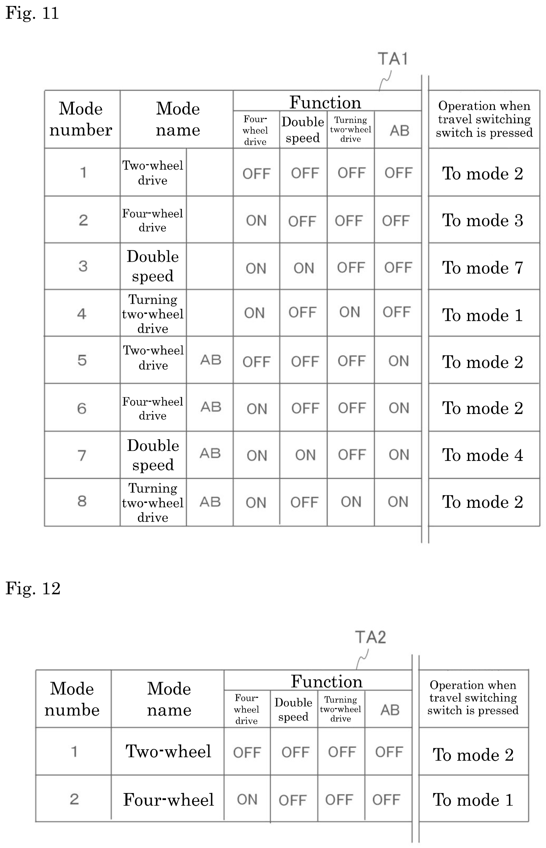

The operation of switching the travel drive mode using the travel switching switch 41 will be described with reference to Figs. 11 and 12. Fig. 11 is a view illustrating another part of the mode transition table used when the auxiliary shift is set to the work stage. As used herein, "illustrating another part" means illustrating a part different from that illustrated in Fig. 7. Fig. 12 is a view illustrating another part of the mode transition table used when the auxiliary shift is set to the travel stage. As used herein, "illustrating another part" means illustrating a part different from that illustrated in Fig. 8.

As illustrated in Fig. 11, the mode transition table (first mode transition table TA1) used when the auxiliary shift is set to the work stage includes, as an item, "Operation when travel switching switch is pressed" in addition to the items illustrated in Fig. 7. The item "Operation when travel switching switch is pressed" is information included in a data record generated for each mode number. The item "Operation when travel switching switch is pressed" stores a switching operation that needs to be performed by the travel drive mode control unit 22 when the operation of switching the travel drive mode using the travel switching switch 41 is performed.

If the travel switching switch 41 is pressed by the operator when the auxiliary shift is set to the work stage, the travel drive mode control unit 22 performs the operation of switching the travel drive mode according to the item "Operation when travel switching switch is pressed" of the first mode transition table TA1.

Here, it is assumed that the setting of the auxiliary shift is the work stage and the current mode setting (corresponding to the setting on the first setting screen SS1) is Mode 1. In this case, every time the operator presses the travel switching switch 41 once, the travel drive mode control unit 22 performs switching such as "Mode 2" → "Mode 3" → "Mode 7" → "Mode 4" → "Mode 1" → "Mode 2", and so on according to the first mode transition table TA1. Specifically, since the "Operation when travel switching switch is pressed" in "Mode 1" is "To Mode 2", when the operator presses the travel switching switch 41, switching to "Mode 2" is performed. In "Mode 2" switched from "Mode 1", since "Operation when travel switching switch is pressed" is "To Mode 3", when the operator presses the travel switching switch 41, switching to "Mode 3" is performed. In "Mode 3" switched from "Mode 2", since "Operation when travel switching switch is pressed" is "To Mode 7", when the operator presses the travel switching switch 41, switching to "Mode 7" is performed. In "Mode 7" switched from "Mode 3", since "Operation when travel switching switch is pressed" is "To Mode 4", when the operator presses the travel switching switch 41, switching to "Mode 4" is performed. In "Mode 4" switched from "Mode 7", since "Operation when travel switching switch is pressed" is "To Mode 1", when the operator presses the travel switching switch 41, switching to "Mode 1" is performed.

As can be seen from the above, when the pressing of the travel switching switch 41 is repeated five times, the mode returns to the original mode. In other words, when the travel switching switch 41 is used, there is a case where a target mode cannot be set unless the switch is pressed up to four times in order to set the target mode. If the number of times of the switch operation until the target mode is set excessively increases, the operator is likely to find the operation bothersome. In consideration of this point, the setting of the automatic brake using the travel switching switch 41 can be enabled only in the double speed mode. In a case where the operator desires to set the automatic brake with respect to another travel drive mode, the operator performs a setting operation using the touch panel TP.

When the mode setting switching operation using the travel switching switch 41 is started, there is a case where a switching operation is started from a mode that cannot be set by the travel switching switch 41, such as "Two-wheel drive + Automatic brake", "Four-wheel drive + Automatic brake", or "Turning Two-wheel drive + Automatic brake". In this case, as illustrated in Fig. 11, in any mode setting, switching to "Mode 2" is temporarily performed when the travel switching switch 41 is pressed. Then, when the travel switching switch 41 is pressed thereafter, switching, such as "Mode 3" → "Mode 7" → "Mode 4" → "Mode 1" → "Mode 2" and so on, is performed every time the travel switching switch 41 is pressed once. That is, it is not possible to return to the originally set "Two-wheel drive + Automatic brake", "Four-wheel drive + Automatic brake", or "Turning Two-wheel drive + Automatic brake" only by operating the travel switching switch 41.

As illustrated in Fig. 12, the mode transition table (second mode transition table TA2) used when the auxiliary shift is set to the travel stage includes, as an item, "Operation when travel switching switch is pressed" in addition to the items illustrated in Fig. 8. "Operation when the travel switching switch is pressed" is similar to that of the first mode transition table TA1 described above, and thus the detailed description thereof will be omitted.

If the travel switching switch 41 is pressed by the operator when the auxiliary shift is set to the travel stage, the travel drive mode control unit 22 performs the operation of switching the travel drive mode according to the item "Operation when travel switching switch is pressed" of the second mode transition table TA2.

Here, it is assumed that the setting of the auxiliary shift is the travel stage and the current mode setting (corresponding to the setting on the second setting screen SS2) is Mode 1. In this case, every time the operator presses the travel switching switch 41 once, the travel drive mode control unit 22 performs switching such as "Mode 2" → "Mode 1" → "Mode 2", and so on according to the second mode transition table TA2. In a case where the auxiliary shift is set to the travel stage, it can be seen that the mode returns to the original mode if the pressing of the travel switching switch 41 is repeated twice.

As can be seen from the above description, the mode settings relating to the travel drive mode using the travel switching switch 41 are restricted as compared with the mode settings using the setting screen of the touch panel TP. However, when the travel switching switch 41 is used, there is also an advantage that the operator can switch the mode setting while viewing the front. The operator can comfortably set the travel drive mode by determining which of the mode setting using the setting screen of the touch panel TP and the mode setting using the travel switching switch 41 is to be used according to a situation.

### <3. Notes, etc.>

Various changes can be made to various technical features disclosed herein without departing from the spirit of the technical creation. In addition, a plurality of embodiments, examples, and modifications described herein may be implemented in combination to the extent possible.

### <4. Supplementary note>

The following supplementary notes are further disclosed regarding the embodiments, examples, and modifications described above.

An exemplary work vehicle of the present invention may be a work vehicle switchable between a plurality of travel drive modes and between a plurality of speed change states, the work vehicle having a configuration (first configuration) in which a display device that displays a setting screen for setting the travel drive modes is provided, and the travel drive modes are settable separately for the speed change states, respectively, using the setting screen.

The work vehicle having the first configuration may have a configuration (second configuration) in which the display device switches and displays the setting screen for each of the speed change states.

The work vehicle having the second configuration may have a configuration (third configuration) in which the speed change states include a first speed change state and a second speed change state, the setting screens include a first setting screen for the first speed change state and a second setting screen for the second speed change state, and settable items are different between the first setting screen and the second setting screen.

The work vehicle having the third configuration may have a configuration (fourth configuration) in which the plurality of travel drive modes include a two-wheel drive mode in which rear wheels are driven and a four-wheel drive mode in which front wheels and the rear wheels are driven.

The work vehicle having the fourth configuration may have a configuration (fifth configuration) in which, when the work vehicle is traveling in the second speed change state, automatic switching from the four-wheel drive mode to the two-wheel drive mode is performed when a traveling speed reaches a preset speed threshold.

The work vehicle having the fifth configuration may have a configuration (sixth configuration) in which a setting of the speed threshold is changeable on the second setting screen.

The work vehicle having the fifth or sixth configuration may have a configuration (seventh configuration) in which prohibition of the automatic switching is settable on the second setting screen.

The work vehicle having the seventh configuration may have a configuration (eighth configuration) in which the automatic switching is prohibited when the speed threshold is set to a predetermined value.

The work vehicle having any one of the third to eighth configurations may have a configuration (ninth configuration) in which the travel drive modes settable on the first setting screen include a two-wheel drive mode in which rear wheels are driven, a four-wheel drive mode in which front wheels and the rear wheels are driven, a double speed mode in which the front wheels are rotated faster than the rear wheels, and a turning two-wheel drive mode in which the four-wheel drive mode is switched to the two-wheel drive mode during turning, and the travel drive modes settable on the second setting screen include the two-wheel drive mode and the four-wheel drive mode.

The work vehicle having any one of the third to ninth configurations may have a configuration (tenth configuration) in which enabling and disabling of an automatic brake is settable in a switched manner for each of the travel drive modes settable on the first setting screen.

The work vehicle having any one of the first to tenth configurations may have a configuration (eleventh configuration) in which the plurality of travel drive modes are settable by a travel switching switch provided around a driver's seat separately from the display device.

### LIST OF REFERENCE SIGNS

- 1: Work vehicle
- 14a: Front wheel
- 14b: Rear wheel
- 16a: Driver's seat
- 41: Travel switching switch
- SS1: First setting screen
- SS2: Second setting screen
- TP: Touch panel (display device)

## Claims

1. A work vehicle switchable between a plurality of travel drive modes and between a plurality of speed change states,
the work vehicle comprising a display device that displays a setting screen for setting the travel drive modes, wherein
the travel drive modes are settable separately for the speed change states, respectively, using the setting screen.

2. The work vehicle according to claim 1, wherein the display device switches and displays the setting screen for each of the speed change states.

3. The work vehicle according to claim 2, wherein
the speed change states include a first speed change state and a second speed change state,
the setting screens include a first setting screen for the first speed change state and a second setting screen for the second speed change state, and
settable items are different between the first setting screen and the second setting screen.

4. The work vehicle according to claim 3, wherein the plurality of travel drive modes include a two-wheel drive mode in which rear wheels are driven and a four-wheel drive mode in which front wheels and the rear wheels are driven.

5. The work vehicle according to claim 4, wherein, when the work vehicle is traveling in the second speed change state, automatic switching from the four-wheel drive mode to the two-wheel drive mode is performed when a traveling speed reaches a preset speed threshold.

6. The work vehicle according to claim 5, wherein a setting of the speed threshold is changeable on the second setting screen.

7. The work vehicle according to claim 6, wherein prohibition of the automatic switching is settable on the second setting screen.

8. The work vehicle according to claim 7, wherein the automatic switching is prohibited when the speed threshold is set to a predetermined value.

9. The work vehicle according to claim 3, wherein
the travel drive modes settable on the first setting screen include
a two-wheel drive mode in which rear wheels are driven,
a four-wheel drive mode in which front wheels and the rear wheels are driven,
a double speed mode in which the front wheels are rotated faster than the rear wheels, and
a turning two-wheel drive mode in which the four-wheel drive mode is switched to the two-wheel drive mode during turning, and
the travel drive modes settable on the second setting screen include the two-wheel drive mode and the four-wheel drive mode.

10. The work vehicle according to claim 9, wherein enabling and disabling of an automatic brake is settable in a switched manner for each of the travel drive modes settable on the first setting screen.

11. The work vehicle according to any one of claims 1 to 10, wherein the plurality of travel drive modes are settable by a travel switching switch provided around a driver's seat separately from the display device.
